# EUROPEAN PATENT SPECIFICATION

(11) **EP 4 200 686 B1**
(45) Date of publication and mention of the grant of the patent: **24.12.2025**
(21) Application number: 21786538.5
(22) Date of filing: 23.08.2021
(51) Int. Cl.: G05D 1/495, G05D 1/82, G05D 105/22, G05D 109/25, B64C 13/50

(54) **HELICOPTER FORCE FEEDBACK SYSTEM**
KRAFTRÜCKKOPPLUNGSSYSTEM FÜR HUBSCHRAUBER
SYSTÈME DE RETOUR DE FORCE D'HÉLICOPTÈRE

(30) Priority: 21.08.2020 GB 202013135
(43) Date of publication of application: 28.06.2023
(73) Proprietor: Hill Group Technologies Limited, Stafford Staffordshire ST16 1GY (GB)
(72) Inventor: HILL, Jason, Rugeley, Staffordshire WS15 1UZ (GB)
(74) Representative: IK-IP LTD
(86) International application number: PCT/GB2021/052186
(87) International publication number: WO 2022/038384

(56) References cited:
- EP-A1- 3 069 990
- EP-A1- 3 569 497
- US-A1- 2005 080 495
- US-A1- 2019 031 330
- US-A1- 2019 047 715
- US-A1- 2019 325 762

## Description

### FIELD OF THE INVENTION

The present application relates to autopilots and haptic feedback control in aircraft. In particular, the application relates to haptic feedback mechanisms for mechanical and hydro-mechanical aircraft including helicopters and fixed-wing aircraft such as aeroplanes.

### BACKGROUND OF THE INVENTION

Aircraft, such as helicopters, can quickly move from safe operating conditions (within their "flightenvelope") to undesirable operating conditions, which can both cause damage to aircraft components, e.g. due to over over-torque or over-power conditions, and it be unsafe as they may cause the helicopter to crash, leading to injury or loss of life for the aircraft pilot and passengers, as well as potentially people on the ground at or near a crash site. It is known to provide dedicated systems for warning pilots of issues, for example in US-A-2015/0344128. However such systems are generally not suitable for light helicopters.

Other prior art approaches are disclosed in US 2019/325762, US 2019/031330, US 2019/047715, US 2005/080495 and EP 3569497. EP 3069990 describes an an artificial force feel generating device for a vehicle such as a helicopter to provide limit indications to the pilot based on sensor information.

It is desirable to provide an improved system to help prevent undesirable operating conditions in aircraft.

### SUMMARY OF THE INVENTION

Aspects of the invention are set out in the independent claims and preferable features are set out in the dependent claims.

There is described herein an autopilot system for a helicopter, the helicopter having: a cyclic and a collective that are physically coupled to helicopter actuators that control cyclic and collective pitch of main rotor blades of the helicopter and anti-torque pedals that are physically coupled to helicopter actuators that control the pitch of tail rotor blades of the helicopter; and preferably at least one servomechanism configured to amplify force applied by the pilot to the cyclic, collective and/or anti-torque pedals; wherein the autopilot system comprises an autopilot actuator configured to: in an autopilot mode, control direction or orientation of the helicopter by applying force to a control link that is physically coupled to one of the helicopter actuators; and in a manual mode, provide stability or control augmentation by applying a force on one of the cyclic, the collective or one or both of the anti-torque pedals to influence the pilot's inputs to urge thehelicopter away from a particular flight condition dependent on monitored aircraft parameters.

By providing additional functionality to autopilot actuators to allow them to provide an influencing force (or haptic feedback) on the pilot controls even when not functioning as an autopilot it is possible, to influence the pilot to avoid conditions that are dangerous and/or could damage the helicopter whilst maintaining pilot control, without adding further weight or complexity to the helicopter because components which are already present for the autopilot system are used.

By basing haptic feedback forces on measured or monitored flight parameters it is possible to provide haptic feedback based on actual parameters of the aircraft's flight, rather than a position of a flight control handle. Such haptic feedback can be more useful because the flight conditions may not be dependent on only a single control input (e.g. control input via manual flight control handle or pedal), but is likely to be dependent on a range of control inputs and possibly other external factors.

This can improve the safety of the aircraft as the haptic feedback can make the pilot aware that the aircraft is approaching limits of its safe operating conditions (or flight envelope) and help prevent or discourage the pilot from taking the aircraft outside the safe operating conditions, whilst maintaining pilot control, for example in the event of an emergency where it may be preferable to operate the aircraft outside normal safe operating conditions to prevent a catastrophic accident (perhaps at the expense of damaging aircraft components). Such decisions remain within the remit of the pilot, rather than an automated system.

Haptic feedback is used in Fly-By-Wire (FBW) aircraft, in which conventional manual (mechanical or hydro-mechanical) controls are replaced by an electronic interface. Electronic force-feedback can be used to make the pilot's controls feel like manual controls, so that it is easier for the pilot to perceive the extent of their input, although there is no mechanical connection between the pilot controls and the aircraft actuators. However the present system can be particularly useful in aircraft with mechanical, hydraulic or hydro-mechanical controls, where haptic feedback is not normally provided (e.g. because there is already some sort of feel from the controls due to the physical coupling) because it can alert the pilot to potential problems and provides feedback that can encourage the pilot to implement control that helps to avert or correct such problems. Advantageously, using the autopilot actuator for both autopilot control in an autopilot mode and haptic feedback in a manual mode, the haptic functionality can be added without providing any additional hardware, complexity or weight. The system can take advantage of servo mechanisms where present to reduce the force required by the actuators.

The collective and the cyclic are generally moveable pilot input handles or levers. The helicopter actuators for the cyclic and collective may be actuators that act on a swashplate of the helicopter to change the pitch of the main rotor blades.

In some embodiments there is a servomechanism for each of the cyclic and the collective and one for the anti-torque pedals to amplify force applied by the pilot. There may be two servomechanisms for the cyclic: one for actuators that influence pitch of the aircraft (nose up/down) and one for actuators that influence roll of the aircraft (rotation about longitudinal axis that passes from front to back of aircraft, or left/right side up/down).

The servomechanisms are each physically coupled to the pilot input (cyclic, collective and/or pedals) and the relevant actuators through mechanical linkages. The servomechanism may for example be hydraulic or electric. For ease of use, the servomechanisms provide a power assistance mechanism to reduce the force required to move the manual flight controls, as it can require a substantial amount of force to move a handle or pedal that is physically connected to aircraft actuators via mechanical linkages. The presently described haptic feedback/autopilot system is particularly applicable for input systems with servos to amplify the pilot inputs, as in these systems to pilot does not need to input a large amount of force to effect control on helicopter actuators and so providing haptic feedback of this kind is particularly helpful. However more powerful feedback actuators may be used where pilot inputs are not amplified by servomechanisms as the haptic feedback force needs to be comparable to the force input by the pilot to effect control of the actuators, which is much larger when servomechanisms are not used.

At least two aircraft parameters are monitored. This means the helicopter flight can be controlled more effectively as there are several different parameters that may influence whether the aircraft is flying safely and/or whether damage may occur to aircraft components.

In some embodiments, at least three flight parameters are monitored.

The present system may particularly helpful in light aircraft. A light aircraft may be capable of handling at least 4 occupants and at most 6 occupants including a pilot. A light aircraft may additionally or alternatively have an empty mass of less than 1000 kg and a maximum gross mass of between 1050 kg and 2000 kg. In other words the maximum capacity is between around 50 kg and 1000 kg.

The force applied to the cyclic, the collective or the anti-torque pedals is a resistive force to resist the pilot moving to an undesirable flight condition, or if the pilot is already moving from the undesirable flight condition to urge the pilot's hand or foot in that direction. The force applied is preferably at least around 5N, and/or not more than around 30N. This provides a suitable force to make the pilot aware of approaching or passing a limit, whilst still enabling the pilot to continue to pass the limit if required. In preferred embodiments the force may be at least 3N and not more than around 50N.

The autopilot system may further comprise a control arrangement configured to: compare each monitored aircraft parameter to a limit for the aircraft parameter; and determine the force to be applied by the autopilot actuator based on the comparisons of the monitored aircraft parameters to their limits.

In different conditions, different of the aircraft parameters may be the limiting factor in operating the helicopter safely and/or without damaging helicopter components. Thus it is preferable to monitor and compare each of the helicopter parameters so that force feedback can be provided based on any of the parameters approaching or reaching their limit. A force may be exerted by the autopilot actuator upon any one of the parameters reaching or coming within a threshold of its limit. Thus while some parameters may be some way off their limit, if the value of only one of the parameters suggests a problem then haptic feedback can be provided.

The control arrangement may be configured to compare one of the monitored flight parameters to a static threshold and to compare another of the monitored flight parameters to a dynamic threshold. The dynamic threshold may vary based on measured conditions, such as air temperature, or on one or more of the other monitored flight parameters.

The controller may be operable to determine the dynamic threshold based on one or more of the other monitored flight parameters. By other monitored flight parameters we mean flight parameters other than the parameter that the dynamic threshold is compared to.

The force applied may be at a first value when the parameter is on a first side of its limit and at a second value when the parameter is on a second side of its limit.

Optionally the control arrangement is configured to compare at least one of the monitored aircraft parameters to a first limit and a second limit for the parameter, and wherein the control arrangement is configured to increase the force exerted by the autopilot actuator between the first limit and the second limit.

In some embodiments the force is increased continually (or even substantially linearly) between the first limit and the second limit, whereas in other embodiments the force is increased in a step-wise manner such that below the first limit (or above for parameters where the limit is a lower limit, rather than a higher limit, for the parameter) a first force or no force is applied, between the first limit and the second limit a second, greater force is applied, and above the second limit (or below, where the limits are lower limits) a third, even greater force is applied.

The second limit may be at or very close to the maximum or minimum value of the parameter required for keeping the helicopter within a safe flying envelope, whilst the first limit may be some way from the maximum or minimum value such that the first force provides a first warning that the edge of the flying envelope is approaching and the second force provides a clearer warning.

The determined force may be dependent on the length of time the parameter is at its limit, past its limit or within a threshold of its limit.

The determined force may increase with time, for example gradually or linearly, or in noticeable steps (for example increasing a predetermined amount - e.g. 0.5N - for a predetermined time increase - e.g. 10 seconds).

The limit may be based on a parameter value that the helicopter can safely hold for only a certain length of time. For example the helicopter may be able to maintain one of the parameters at a value slightly below the maximum allowed value for a short period of time, such as 30 seconds, and may be able to maintain the parameter at a value some way below the maximum allowed value for longer, say 5 minutes. Thus the threshold may depend on the length of time for which the parameter is above a certain value or within a certain range. As the length of time above the value or within that range approaches the maximum allowed length of time, the haptic feedback output may be activated or increased.

The system may be configured to provide a force on one of the cyclic, the collective or one or both of the anti-torque pedals when one of the monitored parameters is at its limit, but provide no or a significantly reduced force when the one of the monitored parameters is either side of its limit.

Thus a force may be provided for a short time when the parameter reaches its limit and can act as a warning signal to the pilot, but as the limit is passed the force is reduced significantly or removed completely so the pilot can continue to move the relevant pedal(s) or cyclic or collective with relative ease after the warning has been given.

Generally such a limit will not be at or very close to the maximum or minimum value of the parameter required for keeping the helicopter within a safe flying envelope, and instead the limit would be indicative of approaching the maximum or minimum value of the parameter required for keeping the helicopter within the safe flying envelope. A second limit for the parameter may be provided closer to the maximum or minimum value.

Reducing a force significantly may comprise reducing the force by at least 50%, or at least 75%.

The monitored aircraft parameters may include at least one engine parameter selected from: transmission torque; engine temperature, such as exhaust temperature; and gas generator speed.

Gas generator speed may refer to a rotational speed of a gas generator of the helicopter engine. A helicopter engine may be a turbine engine, such as a turboshaft engine, having a gas generator assembly and a power section assembly, arranged such that they can rotate independently. This may be referred to as free turbine power. The gas generator speed may be referred to as the N1 or NG, whilst the power section speed, or power turbine speed, may be referred to as the N2 or NP.

There may be a maximum torque that the engine can provide without the engine (or another helicopter component, such as a gearbox) being damaged, so monitoring torque can prevent engine damage. Sometimes operating a helicopter at or near its torque limit may be dangerous because if more torque is suddenly required, e.g. to correct helicopter orientation due to an external factor such as wind gusts, this additional torque may not be available and thus the pilot may not be able to keep the helicopter in a safe flight. This applies particularly in a hover, where considerable torque may be required by the tail rotor to apply corrections, but some power must still be used by the main rotor blades to prevent the helicopter descending.

Instead of, or in addition to, torque, power output of the engine may be measured. In preferred embodiments the monitored parameters include at least two engine parameters.

Additionally or alternatively an engine temperature such as the temperature in a combustion chamber of the engine may be monitored. This may prevent overheating of the engine.

In some embodiments engine temperature may be compared to a dynamic limit that changes based on other measured conditions. For example, a temperature limit may vary based on altitude and/or air pressure (which are linked).

The monitored aircraft parameters may include parameters from which engine failure can be detected. Thus the autopilot actuator may be configured to provide a force to one or more of the cyclic, the collective or the antitorque pedals in the event of engine failure being detected. In the event of engine failure it is preferable to lower the pitch of the main rotor blades, which reduces lift and drag and helps to achieve autorotation of the main rotor blades so the helicopter can safely descend.

In some embodiments the monitored aircraft parameters additionally or alternatively include rotor speed of the main rotor of the helicopter.

The autopilot system may comprise a monitoring arrangement configured to monitor the aircraft parameters. and determine the required force based on the monitoring.

The monitored aircraft parameters may also include airspeed and/or altitude (or height above ground) of the helicopter.

Monitoring airspeed and height above ground at the same time may allow the helicopter to avoid dangerous height/speed conditions. Operation outside safe height/velocity parameters is known as operation within the "dead man's curve" due to its shape on a height/velocity chart and the consequences of operating within these parameters. These conditions are dangerous because it may be impossible to bring the helicopter into autorotation from starting points within these parameters, for example because the helicopter is at a significant height off the ground (such that a crash landing would be very dangerous) but airspeed would not be high enough to bring the helicopter into autorotation.

The aircraft parameters may include the load factor of the aircraft. The load factor is the ratio of the lift of an aircraft to its weight and is a measure of the stress or load to which the structure of the aircraft is subjected to.

The autopilot actuator may comprise a motor arranged to exert a force on the cyclic, the collective or the anti-torque pedals and on the control link. The same motor can be used for providing the autopilot control, and then be run in reverse to provide the haptic feedback.

In some embodiments, the autopilot actuator is configured to: in the autopilot mode, apply a force to a control link that is physically coupled to a helicopter actuator that controls collective pitch of the main rotor blades of the helicopter; and in the manual mode, apply a force on the collective to influence the pilot's input on the collective to urge the helicopter away from a particular flight condition dependent on monitored aircraft parameters.

Preferably the force applied on the collective in the manual mode is in a direction to urge the collective to influence the pilot to reduce the lift from the main rotor blades. Reducing the rotor blade pitch is helpful in many circumstances, because it may reduce the torque required to turn the main rotor blades and may cause the helicopter to descend.

In other embodiments, haptic feedback is provided additionally or alternatively to the cyclic control handle (that controls pitch and roll of the helicopter by changing the pitch of the blades at different points in their rotation about the rotor head) by the above-mentioned mechanism.

Optionally the autopilot actuator is configured to: in the autopilot mode, apply a force to a control link that is physically coupled to a helicopter actuator that controls the pitch of the tail rotor blades of the helicopter; and in the manual mode, apply a force on one or both anti-torque pedals to influence the pilot's input on the anti-torque pedals to urge the helicopter away from a particular flight condition dependent on monitored aircraft parameters.

In some embodiments there may be two autopilot actuators for the anti-torque pedals, to control pitch in each direction and to apply force on the pedals in each direction. However in preferred embodiments the pedals are linked and the autopilot actuators act in both directions so a single actuator can push, pull and hold position.

In some embodiments the autopilot system comprises a first actuator for controlling collective pitch of the main rotor blades of the helicopter in autopilot mode and providing a force on the collective in manual mode, and comprises a second (and optionally third) actuator for controlling pitch of tail rotor blades in autopilot mode and applying a force on one or both anti-torque pedals in manual mode.

The autopilot system preferably further comprises: a monitoring arrangement configured to monitor the monitored aircraft parameters. Alternatively monitoring may be provided by a device or system that is separate from, but communicably coupled to, the autopilot system.

Generally the autopilot system will also comprise an interface for receiving user inputs to set airspeed, heading and/or altitude settings for the autopilot mode.

There is also described herein a method of providing control feedback for a helicopter having: a cyclic and a collective that are physically coupled to helicopter actuators that control cyclic and collective pitch of main rotor blades of the helicopter and anti-torque pedals that are physically coupled to helicopter actuators that control the pitch of tail rotor blades of the helicopter; at least one servomechanism configured to amplify force applied by the pilot to the cyclic, collective and/or anti-torque pedals; and an autopilot having an autopilot actuator configured to, in an autopilot mode, apply force to a control link that is physically coupled to one of the helicopter actuators to control direction or orientation of the helicopter; the method comprising, when the autopilot is in a manual mode: monitoring flight parameters; determining, based on the monitored flight parameters, that the helicopter is approaching a particular flight condition; and based on the determining, using the autopilot actuator to provide stability or control augmentation by applying a force on one of the cyclic, the collective or one or both of the anti-torque pedals to influence the pilot's inputs to urge the helicopter away from the particular flight condition.

Preferably determining that the helicopter is approaching a particular flight condition comprises: comparing each monitored aircraft parameter to a limit for the aircraft parameter; and the method further comprises: determining the force for the autopilot actuator to apply based on the comparisons of the monitored aircraft parameters to their limits.

Optionally, comparing each monitored aircraft parameter to a limit for the aircraft parameter comprises: comparing one of the monitored aircraft parameters to a first limit for the parameter and to a second limit for the parameter; and determining the force for the autopilot actuator to apply comprises: selecting a first, lower force if the parameter is at or near the first limit, and selecting a second, higher force if the parameter is at or near the second limit.

Determining the force for the autopilot actuator to apply may be dependent on the length of time the parameter is at its limit, past its limit or within a threshold of its limit.

There is also described herein: an autopilot system for an aircraft having pilot controls that are physically coupled to aircraft actuators that control direction or orientation of the aircraft, wherein the autopilot system comprises: in an autopilot mode, control direction or orientation of the aircraft by applying force to a control link that is physically coupled to one of the aircraft actuators; and in a manual mode, provide stability or control augmentation by exerting a force on at least one of the pilot controls to influence the pilot's inputs to urge the aircraft away from a particular flight condition dependent on monitored aircraft parameters. The aircraft may be a fixed-wing aircraft such as an aeroplane. The aircraft actuators may control ailerons and/or elevators of the aeroplane for pitch and roll control.

Any system feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to system aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

### BRIEF DESCRIPTION OF THE FIGURES

Methods and systems for providing haptic feedback in aircraft are described by way of example only, in relation to the Figures, wherein:
Figure 1 shows a perspective view of an example helicopter;
Figure 2 shows the aircraft of Figure 1 with reference to its turning axes;
Figure 3 shows an example pilot control arrangement;
Figure 4 shows a block diagram of an example autopilot system connected to helicopter actuators;
   and
Figure 5 shows an example method for providing haptic control in a helicopter.

### DETAILED DESCRIPTION

### Example Aircraft

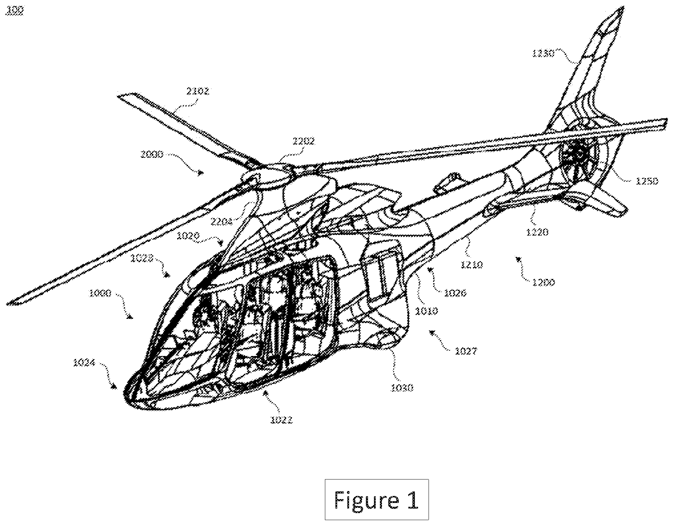

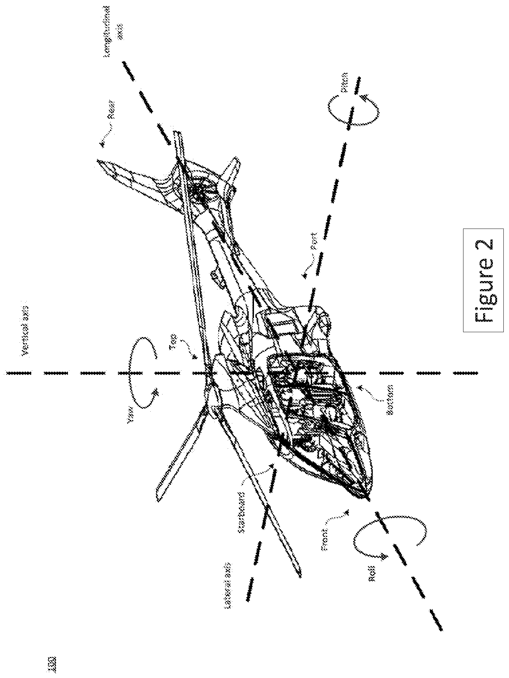

Referring to Figures 1 and 2, a helicopter 100 will now be described.

The helicopter 100 has an aerodynamic fuselage 1000, a tail boom assembly 1200, a main rotor assembly 2000, a power plant 3000 and a landing gear arrangement 4000. The fuselage 1000 comprises a shell 1010, where the shell 1010 defines a top 1020, bottom 1022, front 1024, rear 1026, left 1027 and right 1028 of the fuselage 1000. The fuselage 1000 also has a length 1002 from the front 1024 to the rear 1026, and a maximum width 1004.

Referring to Figure 2, the helicopter 100 has a front, rear, left, right, top and bottom. The left and right may alternatively be referred to as port and starboard respectively. The helicopter 100 has a longitudinal axis, a lateral axis and a vertical axis. The longitudinal axis extends between the front and the rear of the helicopter 100. The lateral axis extends between the left and the right of the helicopter 100. A direction parallel to the lateral axis is a transverse direction, and in forward flight is generally horizontal and perpendicular to the direction of forward travel. An outward direction is substantially parallel to the lateral axis and away from the longitudinal axis. An inward direction is substantially parallel to the lateral axis and towards the longitudinal axis. The vertical axis extends between the top and the bottom of the helicopter 100. In forward flight, the vertical axis is substantially vertical and perpendicular to the direction of forward travel.

Standard aeronautical terms aft and fwd are used. Aft or rearward is used here to mean towards the rear of the helicopter 100 or away from the direction of forward travel. Fwd, fore or forward, is used here to mean towards the front of the helicopter 100 or towards the direction of forward travel.

A first component forward of or in front of a second component is positioned closer to the front of the helicopter 100 along the longitudinal axis than the second component, although is not necessarily positioned on the longitudinal axis itself. Similarly, a first component backward of or behind a second component is positioned closer to the rear of the helicopter 100 along the longitudinal axis than the second component, although is not necessarily positioned on the longitudinal axis itself. A first component upward of or above a second component is positioned closer to the top of the helicopter 100 along, although not necessarily on, the vertical axis than the second component. Similarly, a first component below, beneath, under or downward of a second component is positioned closer to the bottom of the helicopter 100 along the vertical axis than the second component.

Pitch of the helicopter 100 is a rotation of the helicopter 100 about the lateral axis. Yaw of the helicopter 100 is a rotation of the helicopter 100 about the vertical axis. Roll of the helicopter 100 is a rotation of the helicopter 100 about the longitudinal axis.

The helicopter 100 has landing gear (not shown) to support the helicopter 100 when on the ground. The landing gear may be fixed or retractable and may include skids or wheels. The landing gear provides a base for the helicopter 100 when on the ground, vertices of the base defined by points of contact between the landing gear and the ground.

### Pitch control in helicopters

In helicopters a cyclic controller is used to control the mechanical pitch angle, or feather, of the helicopter blades. The cyclic control is connected mechanically or electronically to actuators that cause the pitch of the rotor blades to change at different points in the blades' rotation to effect the control input by the pilot at the cyclic controller. In a hover, altering the pitch of the blades changes the movement of the helicopter forward, back, and laterally. In forward flight altering the pitch of the blades causes the helicopter to roll into a turn in a desired direction (lateral movement), or tilt the nose of the helicopter up and down (longitudinal movement), resulting in altitude changes (climbing or descending flight).

Pitch control in helicopters is transferred to the rotor blades via a swashplate arrangement, which generally comprises a stationary swashplate and a rotating swashplate. The stationary swashplate is tiltable in all directions and can move vertically. Actuators connected (mechanically or electronically) to the user controls cause the movement of the stationary swashplate. Where autopilot is available, the autopilot computer system can also control the actuators. The rotating swashplate is connected to the stationary swashplate such that up/down and tilting movements of the stationary swashplate are transferred to the rotating swashplate, and thence to the rotor blades.

Referring to Figure 1 again, a pilot can provide cyclic and collective control inputs to control the helicopter 100 in flight. The main rotor assembly 2000 comprises rotor blades 2102 coupled to and configured to rotate with a central hub about an axis of rotation provided by a rotor mast extending from the top 1020 of the fuselage. The is hub enclosed by a rotor head fairing 2202. Each blade 2102 is configured to rotate at the root about its length so as to change its angle of attack. An upper swashplate and a lower swashplate are disposed about the mast and are arranged such that they collectively tilt and move up and down the mast. The upper swashplate rotates with the blades 2102 and has an upper control link coupled to each rotor blade 2102 to cause each rotor blade 2102 to twist about its length.

The lower swashplate is non-rotating and receives control input from the pilot's cyclic and collective controls, wherein a cyclic control input causes the lower swashplate to tilt and a collective control input causes the lower swashplate to move up or down the mast. Such tilting or movement is replicated in the upper swashplate, causing the angle of attack and therefore lift force generated by each blade 2102 to change. The tilt of the lower swashplate may also be described as a rotation of the lower swashplate about its lateral and longitudinal axes.

A cyclic input causes the swashplates to tilt, meaning the pitch of each blade 2102 varies as it rotates around the hub between a maximum at the azimuth corresponding to the highest point of the lower swashplate, and a minimum at the azimuth corresponding to the lowest point of the lower swashplate. By way of example, the pilot may provide a longitudinal cyclic input by moving a cyclic control towards the front (fwd) or the rear (aft) of the helicopter 100, thus tilting the swashplates causing the rotor blades 2102 to achieve a maximum lift when towards the rear or front respectively and a minimum lift when towards the front or rear respectively. This varies the fwd and aft movement of the helicopter 100 and induces a change in pitch of the front 1024 or nose of the helicopter 100 (downwards when moving fwd or forwards, upwards when moving aft or backwards). In forward flight, longitudinal cyclic control input can be used to adjust the forward speed and thus pitch of the helicopter 100. Similarly, a lateral cyclic input to the left 1027 or right 1028 tilts the swashplates laterally, causing the helicopter to move towards the left 1027 or right 1028. This induces roll, i.e. rotation about a longitudinal axis of the helicopter 100, to the left 1027 or right 1028.

A collective input provides a uniform change in pitch for all of the blades 2102, resulting in an overall change in lift for the helicopter 100. In a hover or level flight, an increased collective input therefore causes the helicopter 100 to climb vertically or upwards, and a decreased collective input causes the helicopter 100 to descend vertically or downwards. In pitched (forward) flight, a collective input can be used to vary the speed of the helicopter 100 without varying the pitch of the helicopter 100, but will induce an ascent or descent.

Further, anti-torque control input provided by the pilot, typically via left and right pedals, controls the angle of attack of tail rotor blades in the tail rotor assembly 1200. This varies the torque applied by a tail rotor 1250, so can be used to adjust the yaw or yaw rate (i.e. the bearing direction) of the helicopter 100 in hover. In forward flight, an anti-torque control input varies the side-slip angle of the helicopter 100, i.e. the angle between the direction of travel and the heading of the helicopter 100. Cyclic, collective and anti-torque controls can be used in any combination to achieve a range of manoeuvres and flying conditions.

### Pitch and roll control in fixed-wing aircraft

In fixed-wing aircraft pitch control generally refers to changes in front-to-back tilt, which can be controlled by elevators on the aircraft. Roll refers to side-to-side tilting of the aircraft caused by adjustments to the ailerons, which make the aircraft to be tilt downwards on one side to cause the aircraft to turn in one direction or the other. Roll and pitch are traditionally controlled by a single stick, or joystick, controller, which can be positioned coming up from the floor of the aircraft, either between the pilot's legs or next to the pilot's seat.

### Fly-by-wire (FBW) and manual control aircraft

'Fly-by-wire' aircraft exist, in which instead of manual controls, an electronic interface is used. In 'fly-by-wire' aircraft there does not need to be a mechanical connection between the controls with which the user/pilot interacts and the actuators on the aircraft because electric signals are derived from the pilot input in the controls and thus control instructions are transmitted electronically to the actuators. Therefore the pitch and roll controller (the cyclic, or cyclic stick, in helicopters) may be mounted to the side of the pilot's seat.

The arrangements described herein are particularly useful for aircraft with manual flight control as the need for a mechanical connection (or linkages). Such controls may be assisted by electronic or hydraulic servomechanisms.

### Effects of control on aircraft flight

Changing control to the aircraft actuators may have different effects on how the aircraft flies dependent on the circumstances.

In a helicopter, flight is generally either forward flight or hover flight. In forward flight the helicopter, as the name suggests, moves forwards in the air. In a hover the helicopter is kept in a generally stationary position, but corrections are often needed to maintain the position. Autorotation is also possible in helicopters, in which the main rotor blades of the helicopter turn due to air passing the rotor blades, rather than due to being driven by the helicopter engine (or equivalent). Autorotation can be used to land the aircraft safely in the event of engine failure.

In forward flight moving the cyclic forward makes the nose pitch down. This has the effect of reducing the altitude and increasing airspeed (due to moving downward). Moving the cyclic back makes the nose pitch up. This has the effect of slowing the helicopter and making it climb. Increasing collective pitch of the main rotor blades while maintaining a constant airspeed causes the helicopter to ascend. This will also require additional torque from the engine so the rotor can generate the lift. Decreasing the collective pitch of the main rotor blades makes the helicopter descend and reduces torque on the engine.

When in a hover, using anti-torque pedals to control yaw of the helicopter can take a large amount of power from the engine, so engine power limits are more likely to be reached in hover conditions.

### Safe Flight and Flight Envelopes

Most aircraft will have maximum airspeeds they can safely fly at. Therefore if an aircraft is at, approaching or has surpassed a maximum speed it is desirable to prevent further speed increases, and preferably to urge the controls to decreasing the airspeed. In such situations it is desirable to avoid downward pitch (nose down). This may be achieved by avoiding sending downward pitch controls to the swashplate actuators on a helicopter or the elevators on a fixed wing aircraft.

We note that air speed gauges may indicate an airspeed that is different from the true airspeed, e.g. at different altitude due to changes in pressure and temperature that come with altitude.

### Engine parameters

Aircraft may have different allowable engine parameters. For example a helicopter engine will have a maximum amount of power or torque that it can safely provide. Overpowering the engine may be detrimental to the engine and could cause a failure.

The engine may be able to provide up to a maximum power, but may not be able to maintain powers close to the maximum power for extended periods of time. Therefore there may be time-dependent power limits, such as 30 second or 5 minute power limits. A helicopter could maintain a higher power for 30 seconds than it could maintain for 5 minutes before the likelihood of damage to the engine or other components is increased above an acceptable level.

In a helicopter there are also limits on the rotor speed. In particular, the rotor speed should be maintained above a certain level to allow the helicopter to fly safely.

### Pilot Control System

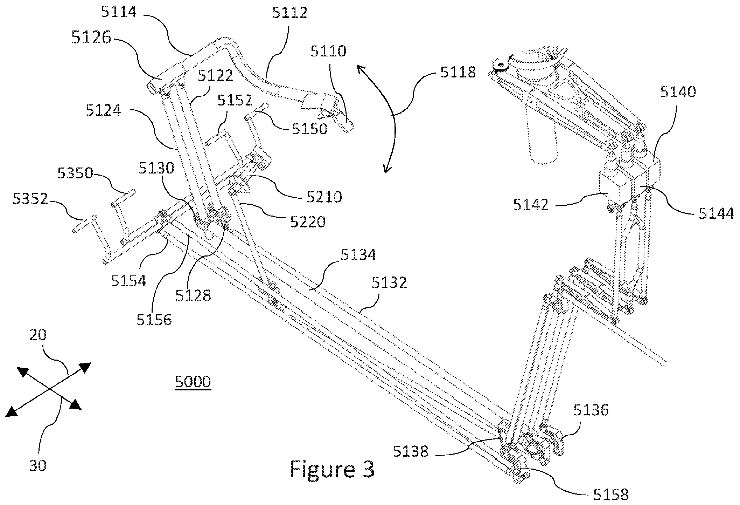

Referring to Figure 3, a pilot control arrangement 5000 for an aircraft that can be used for receiving pilot input will now be described. The pilot control arrangement 5000 of Figure 3 may be used in the helicopter of Figure 1. A first arrow 20 marks the lateral, or transverse direction across the aircraft (side-to-side across the aircraft, if one is facing the direction of normal, forward motion of the aircraft). A second arrow 30 shows longitudinal, or front/back (fore/aft) direction in the reference frame of the aircraft.

The pilot control arrangement 5000 comprises a cyclic handle 5110 arranged to be held by a pilot. The cyclic handle 5110 can be moved by the pilot to control pitch and roll (longitudinal and lateral positioning) of the aircraft. The cyclic handle 5110 is attached to an elongate connector portion 5112 that extends generally forward (or in the fore, or fwd direction) from the cyclic handle 5110. The elongate connector portion 5112 has a distal end at its most forward point in the aircraft. The elongate connection portion 5112 is connected to an elongate transverse arm 5114 that extends transversely across the aircraft. The cyclic handle 5110, elongate connector 5112 and transverse arm 5114 may be integrally formed of a single piece of material, or may be formed of separate parts fixed together.

The transverse arm 5114 is coupled to aircraft actuators that control pitch and roll of the aircraft. The transverse arm 5114 is coupled to these aircraft actuators by a first support arm 5122 for transmitting pitch (longitudinal orientation) control commands to aircraft actuators. The transverse arm 5114 is also coupled to a second support arm 5124 for transmitting roll (lateral orientation) control commands to aircraft actuators.

The longitudinal orientation (or pitch) of the aircraft can be controlled by moving the cyclic handle 5110 forwards and back (in direction marked by arrow 20). Moving the cyclic handle 5110 forwards causes the aircraft to pitch forwards, or in other words brings the nose of the aircraft down compared to the tail. Moving the cyclic handle 5110 backwards causes the aircraft to pitch backwards, or in other words brings the nose of the aircraft up compared to the tail. This can be used to control speed or elevation of the aircraft.

The lateral orientation (or roll) of the aircraft can be controlled by moving the cyclic handle 5110 from side to side (in direction marked by arrow 30). Moving the cyclic handle 5110 right causes the aircraft to tilt towards the right and moving the cyclic handle 5110 left causes the aircraft to tilt towards the left. This can be used to control turning of the aircraft.

Moving the cyclic handle 5110 forward and back (fore and aft) in the aircraft causes the elongate transverse arm 5114 to move forward and back. Moving the cyclic handle 5110 from side to side (transversely, or laterally) in the aircraft causes the elongate transverse arm 5114 to move from side to side.

The elongate transverse arm 5114 is coupled to a first support arm 5122, or control rod, which transmits longitudinal (or fore and aft) movement of the transverse arm 5114 to one or more actuators that control the pitch, or longitudinal angle of the aircraft, e.g. to bring the nose up or down. The elongate transverse arm 5114 is also coupled to a second support arm 5124, or control rod, which transmits lateral (transverse, or side to side) movement of the transverse arm 5114 to one or more actuators that control the roll, or lateral angle of the aircraft, e.g. to tilt the aircraft to one side or the other.

The top ends of each of the first support arm 5122 and second support arm 5124 are in this case hingedly coupled to the elongate transverse arm 5114. The connection between the top ends of each of the first support arm 5122 and second support arm 5124 is a hinged connection that allows pivoting of each of the first support arm 5122 and the second support arm 5124 about corresponding axes parallel to the longitudinal axis of the aircraft. Thus the angle between the transverse arm 5114 and the first support arm 5122 and the second support arm 5124 changes as the transverse arm 5114 moves from side-to-side. The first support arm 5122 and second support arm 5124 act as parallel motion control rods, staying substantially parallel to each other as they move.

The lower or bottom ends of each of the first support arm 5122 and second support arm 5124 extend beneath the floor of the cockpit. Towards their bottom ends the first support arm 5122 is attached to a first support plate 5128 and the second support arm 5124 is attached to a second support plate 5130. The support plates 5128, 5130 are mounted to the fuselage structure of the aircraft on spherical bearing joints, meaning that the bottom ends of the support arms 5122, 5124 can rotate about longitudinal axes (parallel to the direction of arrow 30) so that the elongate transverse arm 5114 and thus the cyclic handle 5110 is also free to move left/right.

The first (right hand) support arm 5122 is attached to one end of a pitch control push/pull rod 5132, which transmits longitudinal motion towards the mid section of the aircraft. At the other end the pitch control push/pull rod 5132 is attached to a bell crank 5136 to transmit motion upwards via a push/pull rod and into a control lever and thence to another push/pull rod which is then terminated at pitch control servo 5140 to control pitch of the aircraft.

The second (left hand) support arm 5124 is attached to one end of a torque tube 5134, which transmits rotary motion towards the mid section of the aircraft. At the other end the torque tube 5134 is attached to a crank arm 5138 to transmit motion upwards via a push/pull rod and into a control lever. This control lever is attached to another push/pull rod which is then terminated at a roll control servo 5142 to control roll of the aircraft.

The pilot control system 5000 also comprises a collective handle 5210. The collective handle 5210 is coupled to one or more actuators that control pitch of all the blades of the aircraft (helicopter) at the same rate independent of their rotational position to control the lift force. Control of the collective pitch of the blades can allow the pilot to control the helicopter to hover, or descend or ascend vertically, for example. The collective handle 5210 is coupled to the actuator(s) for collective pitch control via a third support arm 5220 for transmitting collective control commands to aircraft actuators. The third support arm 5220 is connected to the aircraft actuators via several push/pull control rods and bellcranks to a lift control servo 5144, from which control commands are transmitted to the swashplate to control collective lift.

The pilot control system 5000 also comprises a left anti-torque pedal 5152 and a right anti-torque pedal 5150. These are positioned so the pilot can press them with his feet as he remains seated in the pilot's seat. Pressing the anti-torque pedals 5150, 5152 changes the pitch of the rotor blades in the tail of the helicopter and thus controls yaw of the helicopter.

Both pedals 5150, 5152 are each connected to a rotation shaft. The shafts are attached the fuselage of the helicopter by rotating joints. Each shaft is connected to a push/pull rod 5154, 5156 which transmits linear motion towards the mid section of the helicopter. At this point, the push/pull rods 5154, 5156 are attached to a bell crank 5158 to transmit motion upwards via another push/pull rod and into a second bell crank. The aft end of this second bell crank is attached to another push/pull rod which transmits linear motion to the helicopter tail.

Figure 3 also shows additional anti-torque pedals 5350, 5352 for a co-pilot positioned on the left hand side of the cockpit. As can be seen, the left additional anti-torque pedal 5352 shares a common rotation shaft with the primary left anti-torque pedal 5152 and the right additional anti-torque pedal 5350 shares a common rotation shaft with the primary left anti-torque pedal 5150. Thus inputs at either set of pedals effects an input on the tail rotor actuator.

### Autopilot System

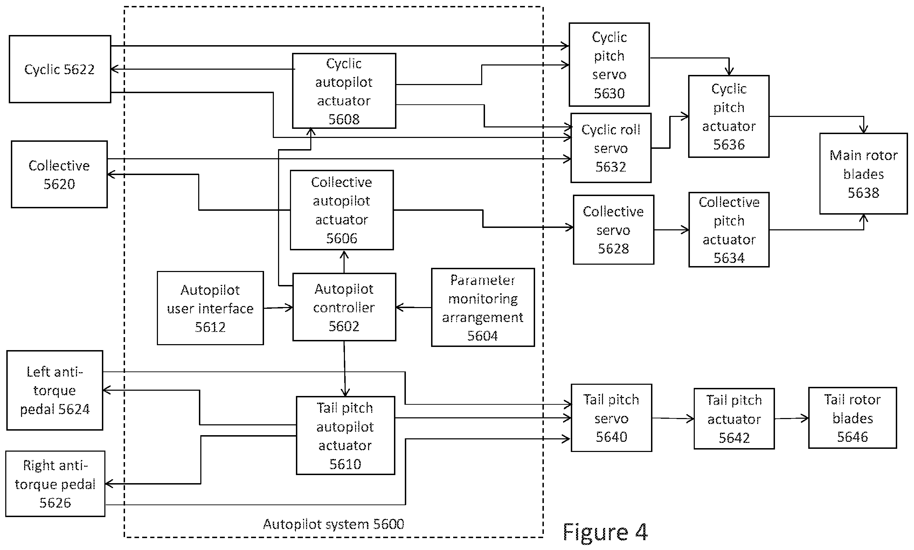

Figure 4 shows an example autopilot system 5600 that is capable of providing haptic feedback to a pilot. In this case the example autopilot system 5600 is fitted in a helicopter and described in relation to helicopter components and actuators. The helicopter may be a helicopter such as the helicopter 100 described above in relation to Figures 1 to 3.

The direction of control signals are shown by using arrows between components.

The helicopter has main rotor blades 5638 and tail rotor blades 5646. These can be of the type of the main rotor blades 2102 and the blades of the tail rotor 1250 of the helicopter 100 shown in Figures 1 and 2.

The helicopter comprises a collective 5620 for controlling collective pitch of the main rotor blades 5638 (and thus lift of the helicopter) and a cyclic 5622 for controlling pitch of the main rotor blades 5638 at different points in their rotation to adjust pitch (nose up/down) and roll (tilt left/right) of the helicopter itself. The collective 5620 and cyclic 5622 may be the same as the collective handle 5210 and the cyclic handle 5110, respectively, as in the pilot control system 5000 shown in Figure 3.

The collective 5620 is physically coupled via one or more control rods to a collective servo 5628. The collective pitch servo 5628 may be the same as the collective control servo 5144 as in the pilot control system 5000 shown in Figure 3. The collective pitch servo 5628 is connected to a collective pitch actuator 5634, which acts on the main rotor blades 5638 to change the lift of all the rotor blades 5638 collectively. The collective pitch actuator 5634 may act to lift a swashplate coupled to the rotor blades 5638.

When the pilot moves the collective 5620 for and aft or up and down (dependent on the way the collective 5620 is arranged in the cockpit), this causes the control linkages between the collective 5620 and the collective servo 5628 to move. The collective servo 5628 amplifies (hydraulically or electronically) the pilot's input force and this is transferred to the collective pitch actuator 5634 to change the pitch of the main rotor blades 5638 to cause the helicopter to ascend or descend.

The cyclic 5622 is physically coupled via one or more control rods to each of a cyclic pitch servo 5630 and a cyclic roll servo 5632. The cyclic pitch servo 5630 and cyclic roll servo 5632 may be the same as the pitch control servo 5140 and the roll control servo 5142, respectively, as in the pilot control system 5000 shown in Figure 3. The cyclic pitch servo 5630 and cyclic roll servo 5632 are connected to a cyclic pitch actuator 5636, which acts on the main rotor blades 5638 to change the pitch of the main rotor blades 5638 at different points in their rotation. Although only one cyclic pitch actuator 5636 is shown, there may be multiple actuators that change the pitch of the rotor blades cyclically. For example, the cyclic pitch servo 5630 and cyclic roll servo 5632 may each act on different actuators, or on multiple actuators. The cyclic pitch actuator 5636 may act to tilt a swashplate coupled to the rotor blades 5638.

When the pilot moves the cyclic 5622 from side to side, this causes the control linkages between the cyclic 5622 and the cyclic roll servo 5632 to move. The cyclic roll servo 5632 amplifies (hydraulically or electronically) the pilot's input force and this is transferred to the cyclic pitch actuator 5636 to change the pitch of the main rotor blades 5638 to cause the helicopter to tilt or roll to one side or the other. When the pilot moves the cyclic 5622 back and forth (for and aft) this causes the control linkages between the cyclic 5622 and the cyclic pitch servo 5630 to move. The cyclic pitch servo 5630 amplifies (hydraulically or electronically) the pilot's input force and this is transferred to the cyclic pitch actuator 5636 to change the pitch of the main rotor blades 5638 to cause the helicopter to tilt fore and aft (or to bring the nose down or up).

The helicopter also comprises a left anti-torque pedal 5624 and a right anti-torque pedal 5626. The left and right anti-torque pedals 5624, 5626 may be the same as the left and right anti-torque pedals 5150, 5152 in the pilot control system 5000 shown in Figure 3. The left anti-torque pedals 5624 and right antitorque pedal 5626 are each coupled via one or more control rods to a tail pitch servo 5640. The tail pitch servo 5640 is connected to a tail pitch actuator 5642, which acts on the tail rotor blades 5646 to change their pitch. Changing the pitch of the tail rotor blades 5646 controls the direction that the nose of the helicopter points by increasing or reducing tail rotor thrust and making the nose yaw. When the pilot depresses one or other of the pedals 5624, 5626 the force is transferred through the control rods to the tail pitch servo 5640, which amplifies the force before transmitting it to the tail pitch actuator 5642, which acts on the tail rotor blades 5646. In alternative embodiments no tail pitch servo 5640 is provided, for example if a lower force is required to move the tail pitch actuator 5642.

The autopilot system 5600 comprises a collective autopilot actuator 5606 coupled to the collective 5620 and to the collective servo 5628. The collective autopilot actuator 5606 is coupled to one or more control rods that link the collective 5620 to the collective servo 5628.

The autopilot system 5600 also comprises a cyclic autopilot actuator 5608 coupled to the cyclic 5622 and to each of the cyclic pitch servo 5630 and the cyclic roll servo 5632. The cyclic autopilot actuator 5608 is coupled to one or more control rods that link the cyclic 5622 to the cyclic pitch servo 5630 and the cyclic roll servo 5632.

In alternative embodiments there are two cyclic autopilot actuators coupled to and configured to act on the cyclic 5622, with one of the cyclic autopilot actuators coupled to and configured to act on the cyclic pitch servo 5630 and the other coupled to and configured to act on the cyclic roll servo 5632.

The autopilot system 5600 comprises a tail pitch autopilot actuator 5610. The tail pitch autopilot actuator 5610 is coupled to each of the left and right anti-torque pedals 5624, 5626 and to the tail pitch servo 5640. The tail pitch autopilot actuator 5610 is coupled to one or more control rods that link the anti-torque pedals 5624, 5626 to the tail pitch servo 5640.

The autopilot system 5600 comprises an autopilot controller 5602, which sends control commands or control signals to each of the cyclic autopilot actuator 5608, the collective autopilot actuator 5606 and the tail pitch autopilot actuator 5610.

The autopilot system 5600 comprises a user interface 5612, through which the user or pilot can enter settings for controlling the aircraft. The autopilot system 5600 also comprises a parameter monitoring arrangement 5604 for monitoring aircraft parameters, such as engine temperature, engine torque, rotor speed of the main rotor blades 5638 and airspeed of the helicopter. The parameter monitoring arrangement 5604 may be communicably coupled to other aircraft components, such as a temperature sensor, an altimeter and an air speed indicator, in order to monitor aircraft parameters. The parameter monitoring system 5604 sends results of its monitoring to the autopilot controller 5602 to help determine control commands.

The autopilot system 5600 has two modes. In an autopilot mode the autopilot system 5600 acts to control the flight of the helicopter by controlling the aircraft actuators 5634, 5636, 5642 based on conditions set by the user. The user may enter autopilot settings, such as altitude, airspeed and by using the autopilot user interface 5612, which are used to control the aircraft flight in autopilot mode. In manual mode the pilot is in control of flying the aircraft and provides control input, including via the cyclic 5622, collective 5620 and the anti-torque pedals 5624, 5626.

When the autopilot system 5600 is in the autopilot mode the collective autopilot actuator 5606 can apply force to the collective servo 5628 to control the collective pitch of the main rotor blades 5638 to adjust vertical lift from the helicopter blades 5638. When the autopilot system 5600 is in the manual mode the collective autopilot actuator 5606 can exert a force on the collective 5620 to influence pilot control of the cyclic 5620. When to apply the force and how much force is determined by the autopilot controller 5602 based on parameters measured by the monitoring arrangement 5604. For example, if the parameters indicate the engine is near overheating or a power or torque limit is being approached the force applied to the collective 5620 will urge it towards a position where the pitch of the rotor blade 5638 is reduced to reduce torque and power requirements on the engine.

Thus the collective autopilot actuator 5606 acts in one direction to exert control on the aircraft actuator 5634 and in the opposite direction to influence the pilot control at the collective 5620.

Power limits may comprise a top maximum limit and also one or more time-dependent limits for power over certain predetermined time periods, for example a power limit that can be achieved for 5 minutes or for 30 seconds. At the maximum limit, exceeding a maximum power for any length of time (however short) may increase likelihood of damage to the engine or other components, such as a gearbox. At the time-dependent limits the engine may be able to perform above the power limit for only a predetermined period of time before there is a high likelihood of damaging the engine or other components. When the power is at or above time-dependent limits the force applied may gradually increase with time, from a first, lower force when initially reaching the limit to a second, higher force at the end of the predetermined time period.

When the autopilot system 5600 is in the autopilot mode, the cyclic autopilot actuator 5608 can apply force to the cyclic pitch servo 5630 and the cyclic roll servo 5632 to control the cyclic pitch of the main rotor blades 5638. When the autopilot system 5600 is in the manual mode the cyclic autopilot actuator 5608 can exert a force on the cyclic 5622 to influence pilot control of the cyclic 5622. When to apply the force and how much force is determined by the autopilot controller 5602 based on parameters measured by the monitoring arrangement 5604. For example, if the helicopter is pitching dangerously to one side or is descending at a dangerous angle the autopilot actuator 5608 may exert a force on the cyclic 5622 to urge it in a direction to correct the dangerous condition.

Thus the cyclic autopilot actuator 5608 acts in one direction to exert control on the aircraft actuator 5636 and in the opposite direction to influence the pilot control at the cyclic 5622.

When the autopilot system 5600 is in the autopilot mode, the tail pitch autopilot actuator 5610 can apply force to the tail pitch servo 5630 to control the pitch of the tail rotor blades 5646. When the autopilot system 5600 is in the manual mode the tail pitch autopilot actuator 5610 can exert a force on one or both of the anti-torque pedals 5624, 5626 to influence pilot control of the cyclic 5622. When to apply the force and how much force is determined by the autopilot controller 5602 based on parameters measured by the monitoring arrangement 5604. For example, if a torque limit is being approached the force may act to reduce the tail rotor blade 5646 pitch to reduce the torque requirements on the engine.

Where there are two sets of pilot controls (such as the additional anti-torque pedals 5350, 5352 shown in the system 5000 of Figure 3) the autopilot actuators can act to apply a force to both sets of controls so haptic feedback is provided regardless of which pilot is currently controlling the aircraft.

In some embodiments only one or only two of the cyclic autopilot actuator 5608, collective autopilot actuator 5606 and tail pitch autopilot actuator 5610 is operable to apply force to the pilot input(s) (the cyclic 5622, collective 5620 or anti-torque pedals 5624, 5626).

In preferred embodiments at least the collective autopilot actuator 5602 is capable of providing haptic force feedback to the collective 5620.

### Force Feedback Method

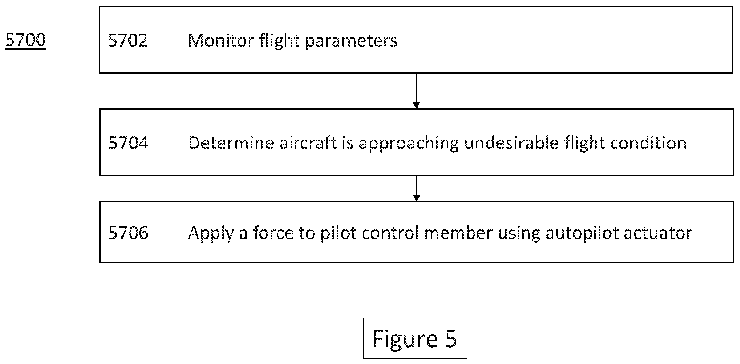

Figure 5 shows a method 5700 for providing force feedback to influence a pilot's control input. The method 5700 may be used in the system 5600 of Figure 4 described above.

At step 5702 flight parameters are monitored. This may comprise monitoring parameters such as torque or power output of a helicopter engine and/or engine temperature. Additionally a flight parameter such as rotor speed of the main rotor of the helicopter may be monitored. Preferably at least two flight parameters are monitored.

At step 5704 it is determined from the aircraft parameters that the aircraft is approaching an undesirable flight condition. Undesirable flight conditions may be conditions in which safety of the pilot and/or passengers is compromised and/or in which there is a high probability of damage occurring to the aircraft. For example if torque or temperature are too high in a helicopter engine, the engine or a related component such as the gearbox may be damaged. If main rotor speed is too low the helicopter may not be able to generate enough lift to fly safely and the probability of a quick, uncontrolled descent and/or a crash is higher.

Step 5704 may comprise comparing each of at least two aircraft parameters to a limit for each of the parameters. The limit may be indicative of an undesirable flight condition, or it may be indicative of being within a threshold of an undesirable flight condition.

In some embodiments one or more of the parameters may be compared to two limits. A first limit may be indicative of approaching an undesirable flight condition and a second limit may be indicative of the undesirable flight condition.

At step 5706 an autopilot actuator applies a force to a pilot control member to urge the control member into a position to bring the aircraft away from the undesirable light condition. The control member may be a cyclic or collective or one or both of the anti-torque pedals in a helicopter.

The force applied is determined based on the determination at step 5704. For example, based on the determination (such as how close a parameter is to a limit) the size of the force or the length of time to apply the force may be determined.

The force applied by the actuator preferably has a progressive region in which the force increases in dependence on proximity to a limit or undesirable flight condition or increasing time in excess of a temporary limit. The force applied may additionally or alternatively increase in a step at a threshold time or limit. The force applied may be arranged to urge the pilot away from exceeding an engine limitation whereby potential exceedance of an allowable engine parameter is presented as a physical stop and preferably wherein the force is applied such that at least a first engine limitation may be over-ridden by force applied by the pilot.

While a specific architecture is shown, any appropriate hardware/software architecture may be employed. For example, external communication may be via a wired network connection.

## Claims

1. An autopilot system (5600) for a helicopter (100), the helicopter having:
a cyclic (5110) and a collective (5210) that are physically coupled to helicopter actuators that control cyclic and collective pitch of main rotor blades (2102) of the helicopter and anti-torque pedals (5150, 5152) that are physically coupled to helicopter actuators that control the pitch of tail rotor blades of the helicopter; and
at least one servomechanism (5628-5640) configured to amplify force applied by a pilot to the cyclic, collective and/or anti-torque pedals;
wherein the autopilot system (5600) comprises an autopilot actuator (5606, 5608, 5610) configured to:
in an autopilot mode, control direction or orientation of the helicopter by applying force to a control link that is physically coupled to one of the helicopter actuators; and
in a manual mode, provide stability or control augmentation, by applying a force on one of the cyclic, the collective or one or both of the anti-torque pedals to influence the pilot's inputs to urge the helicopter away from a particular flight condition dependent on monitored aircraft parameters, wherein the autopilot system further comprises a control arrangement (5602) configured to:
compare each monitored aircraft parameter to a limit for the aircraft parameter; and
determine the force to be applied by the autopilot actuator based on the comparisons of the monitored aircraft parameters to their limits,
**characterized in that**, for a given parameter, the determined force is dependent on the length of time the parameter is at its limit, past its limit or within a threshold of its limit, the determined force increasing with time.

2. An autopilot system according to claim 1, wherein the determined force increases with time linearly or in steps.

3. An autopilot system according to claim 1, configured to provide a force on one of the cyclic, the collective or one or both of the anti-torque pedals when one of the monitored parameters is at a given limit, but provide no or a significantly reduced force when the one of the monitored parameters is either side of the limit.

4. An autopilot system according to any preceding claim, wherein the monitored aircraft parameters include at least one engine parameter selected from:
transmission torque;
engine temperature, such as exhaust temperature; and
gas generator speed.

5. An autopilot system according to any preceding claim, wherein the monitored aircraft parameters include rotor speed of the main rotor of the helicopter.

6. An autopilot system according to any preceding claim, wherein the autopilot actuator comprises a motor arranged to exert a force on the cyclic, the collective or the anti-torque pedals and on the control link.

7. An autopilot system according to any preceding claim, wherein the autopilot actuator is configured to:
in the autopilot mode, apply a force to a control link that is physically coupled to a helicopter actuator that controls collective pitch of the main rotor blades of the helicopter; and
in the manual mode, apply a force on the collective to influence the pilot's input on the collective to urge the helicopter away from a particular flight condition dependent on monitored aircraft parameters.

8. An autopilot system according to any preceding claim, wherein the autopilot actuator is configured to:
in the autopilot mode, apply a force to a control link that is physically coupled to a helicopter actuator that controls the pitch of the tail rotor blades of the helicopter; and
in the manual mode, apply a force on one or both anti-torque pedals to influence the pilot's input on the anti-torque pedals to urge the helicopter away from a particular flight condition dependent on monitored aircraft parameters.

9. An autopilot system according to any preceding claim, further comprising:
a monitoring arrangement configured to monitor the monitored aircraft parameters.

10. An autopilot system according to any preceding claim, further comprising:
an interface for receiving user inputs to set airspeed, heading and/or altitude settings for the autopilot mode.

11. A method of providing control feedback for a helicopter (100) having:
a cyclic (5110) and a collective (5210) that are physically coupled to helicopter actuators that control cyclic and collective pitch of main rotor blades (2102) of the helicopter and anti-torque pedals (5150, 5152) that are physically coupled to helicopter actuators that control the pitch of tail rotor blades of the helicopter;
at least one servomechanism (5628-5640) configured to amplify force applied by a pilot to the cyclic, collective and/or anti-torque pedals; and
an autopilot (5600) having an autopilot actuator (5606, 5608, 5610) configured to, in an autopilot mode, apply force to a control link that is physically coupled to one of the helicopter actuators to control direction or orientation of the helicopter;
the method comprising, when the autopilot is in a manual mode:
monitoring flight parameters;
determining, based on the monitored flight parameters, that the helicopter is approaching a particular flight condition; and
based on the determining, using the autopilot actuator to provide stability or control augmentation, by applying a force on one of the cyclic, the collective or one or both of the antitorque pedals to influence the pilot's inputs to urge the helicopter away from the particular flight condition, wherein determining that the helicopter is approaching a particular flight condition comprises:
comparing each monitored aircraft parameter to a limit for the aircraft parameter; and wherein the method further comprises:
determining the force for the autopilot actuator to apply based on the comparisons of the monitored aircraft parameters to their limits,
**characterized in that**, for a given parameter, determining the force for the autopilot actuator to apply is dependent on the length of time the parameter is at its limit, past its limit or within a threshold of its limit, the determined force increasing with time.

12. An autopilot or method according to any preceding claim wherein the force applied by the actuator has a progressive region in which the force increases in dependence on proximity to a limit or undesirable flight condition or increasing time in excess of a temporary limit.

13. An autopilot or method according to any preceding claim wherein the force applied increases in a step at a threshold time or limit.

14. An autopilot or method according to any preceding claim in which the force applied is arranged to urge the pilot away from exceeding an engine limitation whereby potential exceedance of an allowable engine parameter is presented as a physical stop and preferably wherein the force is applied such that at least a first engine limitation may be over-ridden by force applied by the pilot.

## Patentansprüche

1. Autopilotsystem (5600) für einen Hubschrauber (100), wobei der Hubschrauber aufweist:
einen zyklischen Steuerhebel (5110) und einen Kollektivhebel (5210), die physisch mit Hubschrauber-Aktuatoren gekoppelt sind, die die zyklische und kollektive Neigung der Hauptrotorblätter (2102) des Hubschraubers steuern, sowie Anti-Drehmoment-Pedale (5150, 5152), die physisch mit Hubschrauber-Aktuatoren gekoppelt sind, die die Neigung der Heckrotorblätter des Hubschraubers steuern; und
mindestens einen Servomechanismus (5628-5640), der so konfiguriert ist, dass er die von einem Piloten auf den zyklischen Steuerhebel, Kollektivhebel und/oder Anti-Drehmoment-Pedale ausgeübte Kraft verstärkt;
wobei das Autopilotsystem (5600) einen Autopilot-Aktuator (5606, 5608, 5610) umfasst, der so konfiguriert ist, dass er:
in einem Autopilotmodus, Richtung oder Ausrichtung des Hubschraubers durch Ausüben der Kraft auf eine Steuerverbindung steuert, die physisch mit einem der Hubschrauber-Aktuatoren gekoppelt ist; und
in einem manuellen Modus, Stabilität oder Steuerungsverbesserung durch Ausüben einer Kraft auf einen des zyklischen Steuerhebel, des Kollektivhebel oder eines oder beide Anti-Drehmoment-Pedale bereitstellt, um die Eingaben des Piloten zu beeinflussen und den Hubschrauber abhängig von überwachten Flugzeugparametern aus einem bestimmten Flugzustand herauszudrängen, wobei das Autopilotsystem ferner eine Steueranordnung (5602) umfasst, die so konfiguriert ist, dass sie:
jeden überwachten Flugzeugparameter mit einem Grenzwert für den Flugzeugparameter vergleicht; und
die vom Autopilot-Aktuator ausgeübte Kraft basierend auf den Vergleichen der überwachten Flugzeugparameter mit ihren Grenzwerten bestimmt,
**dadurch gekennzeichnet, dass** die bestimmte Kraft für einen gegebenen Parameter von der Zeitdauer abhängt, die der Parameter an seinem Grenzwert, darüber hinaus oder innerhalb eines Schwellenwerts seines Grenzwerts liegt, wobei die bestimmte Kraft mit der Zeit zunimmt.

2. Autopilotsystem nach Anspruch 1, wobei die bestimmte Kraft linear oder schrittweise mit der Zeit zunimmt.

3. Autopilotsystem nach Anspruch 1, das so konfiguriert ist, dass es eine Kraft auf einen des zyklischen Steuerhebel, des Kollektivhebel oder eines oder beide Anti-Drehmoment-Pedale ausübt, wenn einer der überwachten Parameter einen bestimmten Grenzwert erreicht, aber keine oder eine deutlich reduzierte Kraft ausübt, wenn der ein der überwachten Parameter diesen Grenzwert überschreitet.

4. Autopilotsystem nach einem der vorhergehenden Ansprüche, wobei die überwachten Flugzeugparameter mindestens einen Motorparameter umfassen, ausgewählt aus:
Getriebedrehmoment;
Motortemperatur, z. B. Abgastemperatur; und
Gasgeneratordrehzahl.

5. Autopilotsystem nach einem der vorhergehenden Ansprüche, wobei die überwachten Flugzeugparameter die Rotordrehzahl des Hauptrotors des Hubschraubers umfassen.

6. Autopilotsystem nach einem der vorhergehenden Ansprüche, wobei der Autopilot-Aktuator einen Motor umfasst, der eine Kraft auf den zyklischen Steuerhebel, den Kollektivhebel oder die Anti-Drehmoment-Pedale und auf die Steuerverbindung ausübt.

7. Autopilotsystem nach einem der vorhergehenden Ansprüche, wobei der Autopilot-Aktuator so konfiguriert ist, dass er:
im Autopilotmodus eine Kraft auf eine Steuerverbindung ausübt, die physisch mit einem Hubschrauber-Aktuator gekoppelt ist, der die kollektive Neigung der Hauptrotorblätter des Hubschraubers steuert; und
im manuellen Modus eine Kraft auf den Kollektivhebel ausübt, um die Eingabe des Piloten in den Kollektivhebel zu beeinflussen und den Hubschrauber abhängig von überwachten Flugzeugparametern aus einem bestimmten Flugzustand herauszudrängen.

8. Autopilotsystem nach einem der vorhergehenden Ansprüche, wobei der Autopilot-Aktuator so konfiguriert ist, dass er:
im Autopilotmodus eine Kraft auf eine Steuerverbindung ausübt, die physisch mit einem Hubschrauber-Aktuator gekoppelt ist, der die Neigung der Heckrotorblätter des Hubschraubers steuert; und
im manuellen Modus eine Kraft auf ein oder beide Anti-Drehmoment-Pedale ausübt, um die Eingabe des Piloten auf die Anti-Drehmoment-Pedale zu beeinflussen und den Hubschrauber abhängig von überwachten Flugzeugparametern aus einem bestimmten Flugzustand herauszudrängen.

9. Autopilotsystem nach einem der vorhergehenden Ansprüche, das ferner umfasst:
eine Überwachungsanordnung, die so konfiguriert ist, dass sie die überwachten Flugzeugparameter überwacht.

10. Autopilotsystem nach einem der vorhergehenden Ansprüche, das ferner umfasst:
eine Schnittstelle zum Empfangen von Benutzereingaben zur Einstellung von Fluggeschwindigkeit, Richtung und/oder Flughöhe für den Autopilotmodus.

11. Verfahren zur Bereitstellung von Steuerrückmeldungen für einen Hubschrauber (100), der aufweist:
einen zyklischen Steuerhebel (5110) und einen Kollektivhebel (5210), die physisch mit Hubschrauber-Aktuatoren gekoppelt sind, die die zyklische und kollektive Neigung der Hauptrotorblätter (2102) des Hubschraubers steuern, sowie Anti-Drehmoment-Pedale (5150, 5152), die physisch mit Hubschrauber-Aktuatoren gekoppelt sind, die die Neigung der Heckrotorblätter des Hubschraubers steuern;
mindestens einen Servomechanismus (5628-5640), der so konfiguriert ist, dass er die von einem Piloten auf den zyklischen Steuerhebel, Kollektivhebel und/oder Anti-Drehmoment-Pedale ausgeübte Kraft verstärkt; und
ein Autopilot (5600) mit einem Autopilot-Aktuator (5606, 5608, 5610), der so konfiguriert ist, dass er im Autopilotmodus Kraft auf eine Steuerverbindung ausübt, die physisch mit einem der Hubschrauber-Aktuatoren gekoppelt ist, um Richtung oder Ausrichtung des Hubschraubers zu steuern,
wobei das Verfahren umfasst, wenn sich der Autopilot im manuellen Modus befindet:
Überwachen von Flugparametern;
Bereitstellen, basierend auf den überwachten Flugparametern, dass sich der Hubschrauber einem bestimmten Flugzustand nähert; und
basierend auf diesem Bereitstellen, Verwenden des Autopilot-Aktuators zur Stabilisierung oder Steuerungsverbesserung durch Ausüben einer Kraft auf einen des zyklischen Steuerhebel, des Kollektivhebel oder eines oder beide Anti-Drehmoment-Pedale, um die Eingaben des Piloten zu beeinflussen und den Hubschrauber von dem bestimmten Flugzustand herauszudrängen, wobei das Bereitstellen, dass sich der Hubschrauber einem bestimmten Flugzustand nähert, umfasst:
Vergleichen jedes überwachten Flugzeugparameters mit einem Grenzwert für den Flugzeugparameter; und wobei das Verfahren ferner umfasst:
Bestimmen der vom Autopilot-Aktuator ausgeübten Kraft basierend auf den Vergleichen der überwachten Flugzeugparameter mit ihren Grenzwerten,
**dadurch gekennzeichnet, dass** die Bestimmung der vom Autopilot-Aktuator anzuwendenden Kraft für einen gegebenen Parameter von der Zeitdauer abhängt, die der Parameter an seinem Grenzwert, darüber hinaus oder innerhalb eines Schwellenwerts seines Grenzwerts liegt, wobei die bestimmte Kraft mit der Zeit zunimmt.

12. Autopilot oder Verfahren nach einem der vorhergehenden Ansprüche, wobei die vom Aktuator ausgeübte Kraft einen progressiven Bereich aufweist, in dem die Kraft in Abhängigkeit von der Annäherung an einen Grenzwert oder einen unerwünschten Flugzustand oder von der Zeit über einen temporären Grenzwert hinaus zunimmt.

13. Autopilot oder Verfahren nach einem der vorhergehenden Ansprüche, wobei die ausgeübte Kraft bei einer Schwellenzeit oder einem Grenzwert schrittweise zunimmt.

14. Autopilot oder Verfahren nach einem der vorhergehenden Ansprüche, wobei die ausgeübte Kraft so ausgelegt ist, dass sie den Piloten davon abhält, eine Triebwerksbegrenzung zu überschreiten, wobei eine mögliche Überschreitung eines zulässigen Triebwerksparameters als physikalischer Stopp dargestellt wird, und wobei die Kraft vorzugsweise so ausgeübt wird, dass mindestens eine erste Triebwerksbegrenzung durch die vom Piloten ausgeübte Kraft überwunden werden kann.

## Revendications

1. Système de pilote automatique (5600) pour un hélicoptère (100), l'hélicoptère présentant :
une poignée de cyclique (5110) et une poignée de collectif (5210) qui sont physiquement couplées à des actionneurs d'hélicoptère qui commandent le pas cyclique et collectif des pales de rotor principal (2102) de l'hélicoptère et des pédales anti-couple (5150, 5152) qui sont physiquement couplées à des actionneurs d'hélicoptère qui commandent le pas des pales de rotor de queue de l'hélicoptère ; et
au moins un servomécanisme (5628-5640) configuré pour amplifier une force appliquée par un pilote à la poignée de cyclique, à la poignée de collectif et/ou aux pédales anti-couple ;
dans lequel le système de pilote automatique (5600) comprend un actionneur de pilote automatique (5606, 5608, 5610) configuré pour :
dans un mode pilote automatique, commander une direction ou une orientation de l'hélicoptère en appliquant une force à une liaison de commande qui est physiquement couplée à l'un des actionneurs d'hélicoptère ; et
dans un mode manuel, fournir une augmentation de stabilité ou de commande en appliquant une force sur l'une parmi la poignée de cyclique, la poignée de collectif ou une pédale anti-couple ou les deux pédales anti-couple pour influencer les entrées du pilote afin d'éloigner l'hélicoptère d'une condition de vol particulière en fonction de paramètres d'aéronef surveillés, dans lequel le système de pilote automatique comprend en outre un agencement de commande (5602) configuré pour :
comparer chaque paramètre d'aéronef surveillé à une limite pour le paramètre d'aéronef ;
et
déterminer la force à appliquer par l'actionneur de pilote automatique sur la base des comparaisons des paramètres d'aéronef surveillés à leurs limites,
**caractérisé en ce que**, pour un paramètre donné, la force déterminée dépend de la durée pendant laquelle le paramètre est à sa limite, au-delà de sa limite ou à un certain seuil de sa limite, la force déterminée augmentant au cours du temps.

2. Système de pilote automatique selon la revendication 1, dans lequel la force déterminée augmente au cours du temps de manière linéaire ou par paliers.

3. Système de pilote automatique selon la revendication 1, configuré pour fournir une force sur l'une parmi la poignée de cyclique, la poignée de collectif ou une pédale anti-couple ou les deux pédales anti-couple lorsque l'un des paramètres surveillés est à une limite donnée, mais ne fournir aucune force ou fournir une force significativement réduite lorsque l'un des paramètres surveillés est d'un côté de la limite.

4. Système de pilote automatique selon l'une des revendications précédentes, dans lequel les paramètres d'aéronef surveillés comportent au moins un paramètre de moteur sélectionné parmi :
un couple de transmission ;
une température de moteur, telle que la température d'échappement ; et
une vitesse de générateur de gaz.

5. Système de pilote automatique selon l'une des revendications précédentes, dans lequel les paramètres d'aéronef surveillés comportent une vitesse de rotor du rotor principal de l'hélicoptère.

6. Système de pilote automatique selon l'une des revendications précédentes, dans lequel l'actionneur de pilote automatique comprend un moteur destiné à exercer une force sur la poignée de cyclique, la poignée de collectif ou les pédales anti-couple et sur la liaison de commande.

7. Système de pilote automatique selon l'une des revendications précédentes, dans lequel l'actionneur de pilote automatique est configuré pour :
dans le mode pilote automatique, appliquer une force à une liaison de commande qui est physiquement couplée à un actionneur d'hélicoptère qui commande le pas collectif des pales de rotor principal de l'hélicoptère ; et
dans le mode manuel, appliquer une force sur la poignée de collectif pour influencer l'entrée du pilote sur la poignée de collectif afin d'éloigner l'hélicoptère d'une condition de vol particulière en fonction de paramètres d'aéronef surveillés.

8. Système de pilote automatique selon l'une des revendications précédentes, dans lequel l'actionneur de pilote automatique est configuré pour :
dans le mode pilote automatique, appliquer une force à une liaison de commande qui est physiquement couplée à un actionneur d'hélicoptère qui commande le pas des pales de rotor de queue de l'hélicoptère ; et
dans le mode manuel, appliquer une force sur une pédale anti-couple ou sur les deux pédales anti-couple pour influencer l'entrée du pilote sur les pédales anti-couple afin d'éloigner l'hélicoptère d'une condition de vol particulière en fonction de paramètres d'aéronef surveillés.

9. Système de pilote automatique selon l'une des revendications précédentes, comprenant en outre :
un agencement de surveillance configuré pour surveiller les paramètres d'aéronef surveillés.

10. Système de pilote automatique selon l'une des revendications précédentes, comprenant en outre :
une interface pour recevoir des entrées d'utilisateur pour fixer des réglages de vitesse d'air, de cap et/ou d'altitude pour le mode pilote automatique.

11. Procédé de fourniture d'une rétroaction de commande pour un hélicoptère (100) présentant :
une poignée de cyclique (5110) et une poignée de collectif (5210) qui sont physiquement couplées à des actionneurs d'hélicoptère qui commandent le pas cyclique et collectif des pales de rotor principal (2102) de l'hélicoptère et des pédales anti-couple (5150, 5152) qui sont physiquement couplées à des actionneurs d'hélicoptère qui commandent le pas des pales de rotor de queue de l'hélicoptère ;
au moins un servomécanisme (5628-5640) configuré pour amplifier une force appliquée par un pilote à la poignée de cyclique, à la poignée de collectif et/ou aux pédales anti-couple ; et
un pilote automatique (5600) présentant un actionneur de pilote automatique (5606, 5608, 5610) configuré pour, dans un mode pilote automatique, appliquer une force à une liaison de commande qui est physiquement couplée à l'un des actionneurs d'hélicoptère pour commander une direction ou une orientation de l'hélicoptère ;
le procédé comprenant, lorsque le pilote automatique est dans un mode manuel :
la surveillance de paramètres de vol ;
la détermination, sur la base des paramètres de vol surveillés, que l'hélicoptère s'approche d'une condition de vol particulière ; et
sur la base de la détermination, l'utilisation de l'actionneur de pilote automatique pour fournir une augmentation de stabilité ou de commande, en appliquant une force sur l'une parmi la poignée de cyclique, la poignée de collectif ou une pédale anti-couple ou les deux pédales anti-couple pour influencer les entrées du pilote afin d'éloigner l'hélicoptère de la condition de vol particulière, dans lequel la détermination que l'hélicoptère s'approche d'une condition de vol particulière comprend :
la comparaison de chaque paramètre d'aéronef surveillé à une limite pour le paramètre d'aéronef ; et dans lequel le procédé comprend en outre :
la détermination de la force à appliquer par l'actionneur de pilote automatique sur la base des comparaisons des paramètres d'aéronef surveillés à leurs limites,
**caractérisé en ce que**, pour un paramètre donné, la détermination de la force à appliquer par l'actionneur de pilote automatique dépend de la durée pendant laquelle le paramètre est à sa limite, au-delà de sa limite ou à un certain seuil de sa limite, la force déterminée augmentant au cours du temps.

12. Pilote automatique ou procédé selon l'une des revendications précédentes, dans lequel la force appliquée par l'actionneur présente une région progressive dans laquelle la force augmente en fonction de la proximité d'une condition de vol limite ou indésirable ou d'un temps augmentant dépassant une limite temporelle.

13. Pilote automatique ou procédé selon l'une des revendications précédentes, dans lequel la force appliquée augmente d'un palier à un temps ou une limite seuil.

14. Pilote automatique ou procédé selon l'une des revendications précédentes, dans lequel la force appliquée est destinée à éloigner le pilote d'un dépassement d'une limitation de moteur moyennant quoi un dépassement potentiel d'un paramètre de moteur admissible est présenté comme un arrêt physique et de préférence dans lequel la force est appliquée de telle sorte qu'au moins une première limitation de moteur peut être outrepassée par une force appliquée par le pilote.
